# EUROPÄISCHE PATENTSCHRIFT

(11) **EP 2 732 911 B1**
(45) Veröffentlichungstag und Bekanntmachung des Hinweises auf die Patenterteilung: **22.08.2018**
(21) Anmeldenummer: 13193281.6
(22) Anmeldetag: 18.11.2013
(51) Int. Cl.: B27D 5/00

(54) **Beschichtungsvorrichtung mit Schwenkeinrichtung**
Coating apparatus with pivoting device
Dispositif de revêtement doté d'un système de pivotement

(30) Priorität: 20.11.2012 DE 102012221177
(43) Veröffentlichungstag der Anmeldung: 21.05.2014
(73) Patentinhaber: HOMAG GmbH, 72296 Schopfloch (DE)
(72) Erfinder: Gringel, Martin, 72479 Straßberg (DE); Schmid, Johannes, 72181 Starzach (DE)
(74) Vertreter: Hoffmann Eitle

(56) Entgegenhaltungen:
- EP-A1- 1 892 055
- EP-A2- 2 332 718
- WO-A1-2010/094449
- DE-A1- 3 815 428

## Beschreibung

### Technisches Gebiet

Die Erfindung betrifft eine Beschichtungsvorrichtung nach dem Oberbegriff von Anspruch 1. Ferner ist ein Verfahren zum Beschichten eines Werkstücks mit solch einer Beschichtungsvorrichtung vorgesehen.

### Stand der Technik

Beschichtungsvorrichtungen der eingangs genannten Art finden bei der Bearbeitung von Werkstücken, die bevorzugt zumindest teilweise aus Holz, Holzwerkstoffen, Kunststoff oder dergleichen bestehen, breite Anwendung.

Beispielsweise werden bei der Bearbeitung plattenförmiger Werkstücke, deren Schmalflächen nicht orthogonal zur Plattenoberfläche ausgeführt werden und sogenannte Schrägkanten darstellen, Bearbeitungszentren verwendet, bei welchen das Werkstück beispielsweise schräg beziehungsweise gekippt auf oder vor dem Tisch aufgespannt wird, soweit dies durch die Achsverfahrwege der Maschine und die Freiheitsgrade des Tischs beziehungsweise der Aufspannung möglich ist.

Insbesondere bei der Beschichtung schräger Schmalflächen, sogenannter Schrägkanten, die einen Winkel ungleich 90° zur Plattenfläche aufweisen, ist es nötig, mittels einer manuellen Schwenkeinrichtung eine Anstellung des Bearbeitungsaggregats zur Beschichtung außerhalb der senkrechten Stellung zur Plattenoberfläche einzustellen. Jedoch ist eine Komplettbearbeitung aller Schmalseiten mit Schrägkanten am Werkstück in einer Aufspannung nicht möglich. Das Werkstück muss dazu mehrfach umgespannt werden. Beispielsweise muss ein rechtwinkliges Werkstück viermal um 90° gedreht und umgespannt werden, um an allen vier Schmalflächen bearbeitet werden zu können.

Bei der Möbelherstellung ist zwischen zwei Arten von Schrägkanten im Schmalflächenbereich zu unterschieden. Schrägkanten mit geradem Anteil werden herkömmlicherweise bei dünnen Beschichtungsmaterialien in zwei Stufen beschichtet. Zunächst wird ein Beschichtungsmaterial am senkrechten Teil des Werkstücks angeklebt und dann über eine Verschränkstation entsprechend der Schräge nachgeführt und verpresst. Bei dicken Beschichtungsmaterialien wird dieser Prozess in zwei getrennten Durchläufen durchgeführt, wobei die maximale Schräge begrenzt ist. Das Beschichtungsmaterial wird zunächst senkrecht zugeführt und dann entsprechend der Schräge verformt und angepresst. Dadurch entsteht an der zuerst berührenden Stelle eine offene Leimfuge. Dieser Bereich wird in einem zweiten Durchgang wieder abgefräst und in einem weiteren Verleimprozess wird eine Kante angeleimt.

Bei Schrägkanten mit spitz auslaufender Geometrie wird bei einem Bearbeitungsaggregat zur Verleimung der Neigungswickel manuell eingestellt. Dazu wird der Bereich der Kantenzuführung und Bevorratung in die entsprechende Position gebracht, wodurch eine universelle Anwendung auch bei senkrechten Kanten ausgeschlossen ist. Eine vierseitige Beschichtung eines Werkstücks erfordert ein viermaliges Umspannen des Werkstücks.

Derartige Bearbeitungsvorrichtungen haben sich bewährt. Allerdings werden bezüglich der Bearbeitung von Schrägkanten immer höhere Anforderungen dahingehend gestellt, dass Bearbeitungsvorrichtungen auch Werkstücke mit Schrägkanten ebenso flexibel bezüglich der Konturgestaltung und der Komplettbearbeitung in einer Aufspannung bearbeiten können wie Werkstücke, die ausschließlich senkrechte Schmalseiten aufweisen.

Die EP 2 332 718 A2 ist Stand der Technik, der den Oberbegriff von Anspruch 1 bildet. Die EP 1 892 055 A1, DE 38 15 428 A1 und WO 2010/094449 A1 bilden weiteren Stand der Technik.

### Darstellung der Erfindung

Es ist Aufgabe der vorliegenden Erfindung, bei einfacher Konstruktion eine Beschichtungsvorrichtung dahingehend zu verbessern, dass eine Komplettbearbeitung eines Werkstücks mit Schmalseiten mit unterschiedlicher Neigung zur Plattenoberfläche in einer Aufspannung möglich ist.

Die Aufgabe wird erfindungsgemäß durch eine Beschichtungsvorrichtung mit den Merkmalen von Anspruch 1 gelöst.

Des Weiteren ist zur Lösung der Aufgabe ein Verfahren zum Beschichten eines Werkstücks nach Anspruch 11. Dadurch, dass die Schwenkachse durch das Bearbeitungsaggregat hindurchgeht, ist es möglich, das Bearbeitungsaggregat bei geringer Störkontur beziehungsweise geringem Störradius und somit kleinstem Bauraum zu schwenken. Dadurch sind die Freiheitsgrade für das Aggregat gegenüber einem senkrecht angeordneten, also nicht geschwenktem, Bearbeitungsaggregat nicht eingeschränkt.

Darüber hinaus kann die Kantenbereitstellung beziehungsweise Kantenversorgung weiterhin im nicht-geschwenkten Zustand des Bearbeitungsaggregats erfolgen, sodass in diesem Bereich Standardkomponenten einsetzbar sind.

Der Erfindung liegt der Gedanke zugrunde, den Raum, der zum Schwenken eines Bearbeitungsaggregats nötig ist, zu minimieren und gleichzeitig die räumliche Gesamtverschiebung des Bearbeitungsaggregats zu minimieren, was durch eine imaginäre bzw. virtuelle bzw. effektive Drehung um eine Schwenkachse erreicht wird, die durch das Bearbeitungsaggregat hindurchgeht bzw. in einer Draufsicht in diesem liegt. Die Schwenkführung liegt dabei außerhalb der imaginären Schwenkachse, sodass die Schwenkachse nicht durch die Schwenkführung hindurchgeht. Die Schwenkbewegung wird an einer von der Schwenkachse beabstandet angeordneten Schwenkführung geführt. Mit anderen Worten greift die Schwenkführung nicht an der Schwenkachse an, sondern an einer anderen Stelle des Bearbeitungsaggregats.

Die Bearbeitungsvorrichtung ist vorzugsweise zum formgebenden Bearbeiten vorgesehen. Unter dem Bearbeitungsaggregat ist insbesondere ein Verleimteil, eine Frässpindel, ein Hobel oder ein Bohrer zu verstehen. Ebenso bezieht sich eine Bearbeitung zum Beispiel auf Beschichten, Verleimen, Fräsen, Hobeln und Bohren. Auch zur Laserbearbeitung wie Abtragen oder Schweißen kann das Bearbeitungsaggregat vorgesehen sein. Somit ist das Bearbeitungsaggregat nicht nur für eine spanende Bearbeitung, sondern auch beispielsweise für eine thermische Bearbeitung geeignet.

Besonders vorteilhafte Weiterbildungen der Erfindung sind in den abhängigen Ansprüchen angegeben.

Vorzugsweise ist die Schwenkführung derart ausgebildet, dass die Störkontur des Bearbeitungsaggregats beim Schwenken minimal ist. Dadurch können die oben genannten Vorteile maximal ausgenutzt werden. Beispielsweise wird eine minimale Störkontur des Bearbeitungsaggregats erreicht, wenn die Schwenkachse in der Nähe des geometrischen Mittelpunkts des Bearbeitungsaggregats verläuft.

Des Weiteren ist es vorzuziehen, dass die Schwenkführung zumindest abschnittsweise parabel-, hyperbel- und/oder ellipsenförmig, vorzugsweise kreisförmig, ausgebildet ist. Die Schwenkführung kann auch als eine konkave oder bogenförmige Schwenkführung bezeichnet werden. Durch diese Ausbildung der Schwenkführung ist die Störkontur des Bearbeitungsaggregats beim Schwenken stark reduziert.

Insbesondere kann der Schwenkwinkel -65 bis +65° betragen. Der Schwenkwinkel ist dabei durch den Winkel definiert, um den das Bearbeitungsaggregat von einer ersten Position zu einer zweiten Position um die imaginäre Schwenkachse geschwenkt wird. Vorzugsweise ist der Schwenkwinkel stufenlos einstellbar. Somit ist auch ein Werkstück bearbeitbar, bei dem die erste und zweite Werkstückfläche einen beliebigen Winkel ungleich 90°, vorzugsweise gleich 45°, umfassen. Der Winkel kann auch für die verschiedenen Schmalflächen eines aufgespannten Werkstücks unterschiedlich eingestellt werden, indem der Schwenkwinkel nach Bearbeitung einer Schmalfläche verändert wird. Das heißt, ein Werkstück kann an Schmalflächen mit unterschiedlichen Winkeln zur Plattenfläche in einer Aufspannung bearbeitet werden. Dazu wird das Bearbeitungsaggregat entsprechend um die Schwenkachse bzw. A-Achse geschwenkt.

Des Weiteren kann die Bearbeitungsvorrichtung eine Rotationseinrichtung zur Rotation des Bearbeitungsaggregats bzw. der Schwenkeinrichtung um eine Rotationsachse senkrecht zur Schwenkachse aufweisen. Dadurch kann die Orientierung des Bearbeitungsaggregats relativ zu einem aufgespannten Werkstück geändert werden, sodass eine Umspannung des Werkstücks nicht nötig ist, wenn eine andere Schmalfläche bearbeitet werden soll. Mit anderen Worten bleibt das Werkstück aufgespannt, während die verschiedenen Schmalflächen des Werkstücks durch eine Rotation der Schwenkeinrichtung um die Rotations- bzw. C-Achse bearbeitet werden können.
Des Weiteren kann die Schwenkeinrichtung einen Schwenkantrieb, vorzugsweise einen gelenkig gelagerten Kugelgewindetrieb, einen Druckluftmotor, einen Hydraulikmotor, einen Torquemotor, einen Direktantrieb, einen Riemenantrieb, einen Zahnstangenantrieb oder einen Linearmotor aufweisen. Dadurch kann eine kompakte und zuverlässig angetriebene Bearbeitungsvorrichtung erreicht werden.

Des Weiteren kann die Schwenkeinrichtung und/oder Bearbeitungsvorrichtung einen Antrieb für eine Leimwalze, eine Hauptspindel und/oder einen Messerkopf aufweisen. Dies ermöglicht eine kompakte Anordnung und einen zuverlässigen Antrieb des Bearbeitungsaggregats.

Vorzugsweise weist die Schwenkeinrichtung und/oder Bearbeitungsvorrichtung einen Leimwalzenantrieb und eine Leimversorgung auf. Dadurch ist eine einfache Leimversorgung einer Leimwalze möglich.

Darüber hinaus kann zwischen dem Bearbeitungsaggregat und der Schwenkeinrichtung eine Schnittstelle zur Energie-, Informations- und Medienübertragung und/oder Arretierung des Bearbeitungsaggregats vorgesehen sein. Auf diese Weise ist eine einfache Übertragung verschiedener Daten zwischen dem Bearbeitungsaggregat und der Schwenkeinrichtung und somit der Bearbeitungsvorrichtung vorgesehen. Insbesondere kann eine mechanische Fixierung mittels eines Hohlschaftkegels erfolgen. Diese Arretierung des Bearbeitungsaggregats ermöglicht eine präzise Bearbeitung eines Werkstücks durch die Bearbeitungsvorrichtung.

Darüber hinaus kann das Bearbeitungsaggregat eine Wechselschnittstelle zum Wechseln des Werkzeugs und/oder des Bearbeitungsaggregats aufweisen. Unter der Wechselschnittstelle ist weiter vorzugsweise ein Hohlschaftkegel zu verstehen. Dadurch kann eine flexible Bearbeitung eines Werkstücks gewährleistet werden.

Alternativ kann das Bearbeitungsaggregat keine Wechselschnittstelle aufweisen, sodass das Werkzeug oder das Bearbeitungsaggregat fest an der Schwenkeinrichtung angebracht, vorzugsweise angeschraubt, ist.

Alternativ oder zusätzlich zur kegelschnittförmigen Ausbildung der Schwenkführung kann die Schwenkführung ein ebenes Koppelgetriebe aufweisen. Dies ermöglicht eine weitere Möglichkeit, die imaginäre Schwenkachse innerhalb des Bearbeitungsaggregats zu legen, ohne dass die Schwenkführung mit der Schwenkachse zusammenfällt.

Vorzugsweise erfolgt die Beschichtung des Werkstücks durch Heißprägen, Lackieren oder Tintenstrahlbedruckung. Bei diesem Verfahren kann die erfindungsgemäße Bearbeitungsvorrichtung besonders vorteilhaft eingesetzt werden.

Insbesondere kann die Beschichtung durch eine Leim-, Laser- oder Heißluftbearbeitung durchgeführt werden. Auch hier kommen die Vorteile der erfindungsgemäßen Bearbeitungsvorrichtung in besonderem Maße zur Geltung.

Weitere Merkmale und Vorteile der Erfindung werden anhand der nachfolgenden ausführlichen Beschreibung noch näher ersichtlich werden.

### Kurze Beschreibung der Zeichnungen

- Fig. 1: zeigt eine Bearbeitungsvorrichtung als erste Ausführungsform der vorliegenden Erfindung mit einem Werkstück in einer Ausgangsposition;
- Fig. 2: zeigt eine Bearbeitungsvorrichtung als erste Ausführungsform der vorliegenden Erfindung mit einem Werkstück in einer geschwenkten Position in einer Seitenansicht; und
- Fig. 3: zeigt eine Bearbeitungsvorrichtung als erste Ausführungsform der vorliegenden Erfindung mit einem Werkstück in einer Perspektivansicht.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

Die Bearbeitungsvorrichtung 1 ist ein Bearbeitungszentrum zum Beschichten bzw. Verleimen von Werkstücken 2, die aus Holz, Holzwerkstoffen oder Kunststoff oder dergleichen bestehen. Die Bearbeitungsvorrichtung 1 weist eine Schwenkeinrichtung 3 mit einem Führungsgehäuse 3a, die an der Bearbeitungsvorrichtung 1 angeordnet ist, und eine Schwenkführung (Bogenführung) 4 zum Führen einer Schwenkbewegung um eine Schwenkachse A auf. Des Weiteren ist ein Bearbeitungsaggregat 5, das in der Schwenkführung 4 der Schwenkeinrichtung 5 relativ zur Bearbeitungsvorrichtung 1 schwenkbar gelagert ist, in der Bearbeitungsvorrichtung 1 vorgesehen.

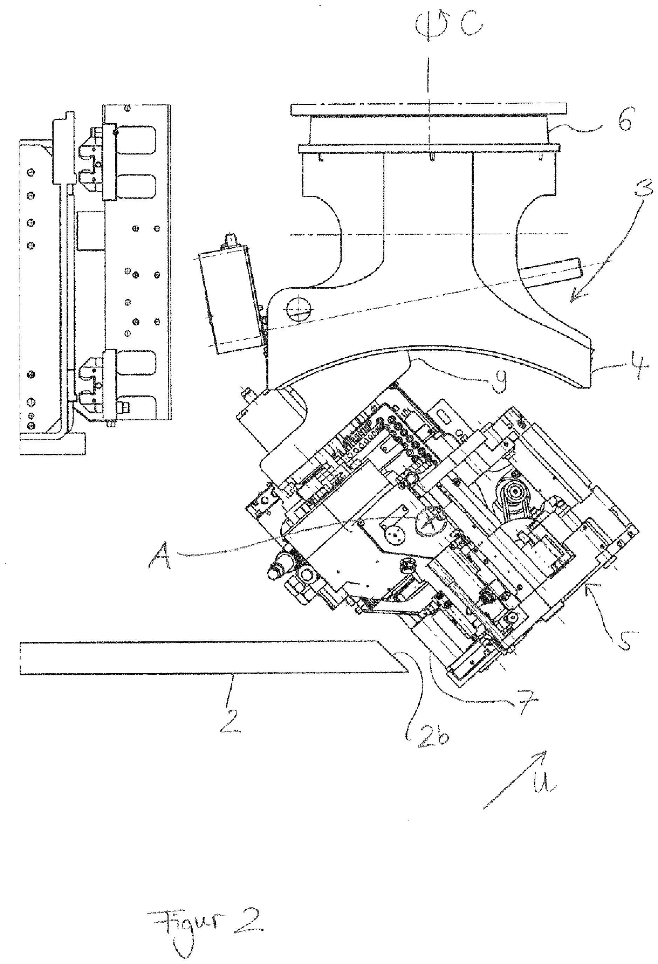

Die Schwenkführung 4 ist derart ausgebildet, dass die Schwenkachse A nicht durch die Schwenkführung geht, sondern zu dieser beabstandet ist. Insbesondere liegt der imaginäre Drehpunkt beziehungsweise die imaginäre Schwenkachse A etwa im Mittelpunkt des Bearbeitungsaggregats, vorzugsweise in einem Bereich an der Oberkante der Leimwalze 7. Die Schwenkachse A in Figur 2 geht durch das Bearbeitungsaggregat 5 (senkrecht zur Papierebene) hindurch.

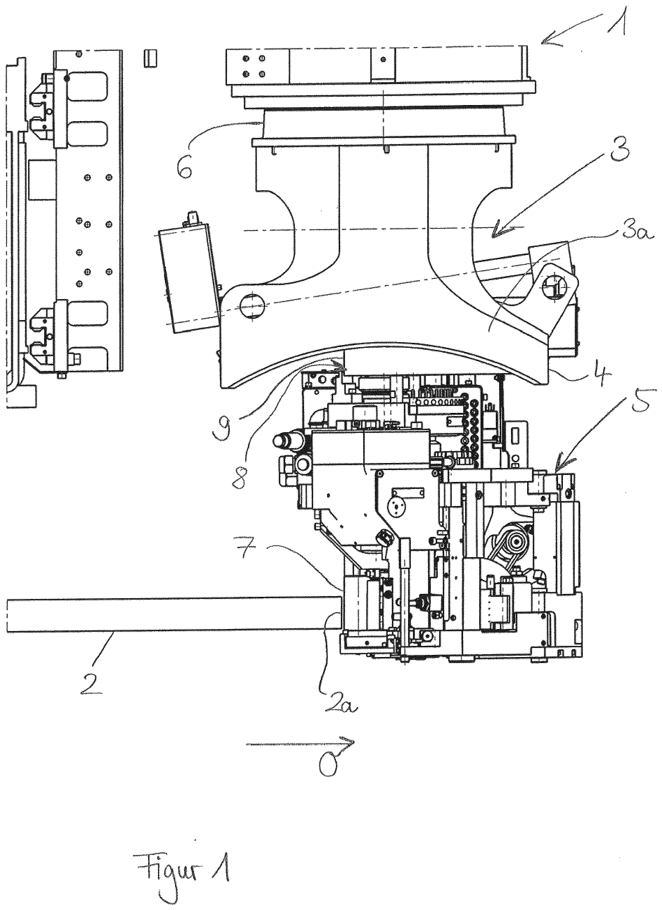

Dadurch ist ein Werkstück 2, das eine erste Werkstückfläche 2a mit einer ersten Orientierung O und eine zweite Werkstückfläche 2b mit einer zweiten Orientierung U ungleich der ersten Orientierung O aufweist, in einer ersten bzw. Ausgangsposition des Bearbeitungsaggregats, wie in Fig. 1 gezeigt, an der ersten Werkstückfläche 2a und in einer geschwenkten bzw. zweiten Position des Bearbeitungsaggregats an der zweiten Werkstückfläche 2b, wie in Fig. 2 gezeigt, bearbeitbar. Die Orientierung O ist in Figur 1 durch den Pfeil O angegeben und steht senkrecht auf der Werkstückfläche 2a. In Figur 2 ist die zweite Orientierung U mit dem Pfeil U angedeutet, der senkrecht auf der zweiten Werkstückfläche 2b steht.

Das Bearbeitungsaggregat 5 der vorliegenden Ausführungsform weist ein Verleimteil und eine Verleimwalze 7 auf. Die Schwenkbewegung, wie in den Fig. 1 und 2 gezeigt, erfolgt in der bogenförmigen Schwenkführung 4 von links nach rechts bzw. rechts nach links.

Insbesondere aus einem Vergleich der Figuren 1 und 2 wird deutlich, dass eine Störkontur des Bearbeitungsaggregats beim Schwenken von einer Ausgangsposition (Fig. 1) zu einer geschwenkten Position (Fig. 2) (ebenso wie beim Schwenken in die umgekehrte Richtung) minimal ist. Der Raum, der zur Durchführung der Schwenkbewegung benötigt wird, ist gering.

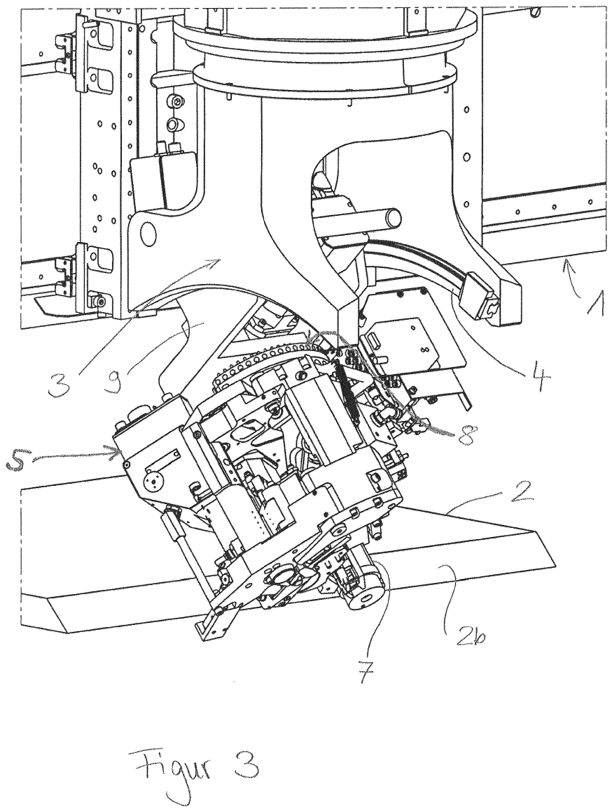

In Figur 3 wird deutlich, dass die Schwenkführung kreisförmig beziehungsweise bogenförmig ausgebildet ist.

Der Schwenkwinkel, um den das Bearbeitungsaggregat in der in Fig. 1 gezeigten Ausgangsposition, die sich auf eine Bearbeitung senkrecht stehender Schmalseiten bezieht, schwenkbar ist, beträgt 65° jeweils nach links und rechts. Das heißt, der Winkel, um den ein Schwenken um die A-Achse möglich ist, beträgt +/- 65°.

Wie in Fig. 2 gezeigt ist insbesondere ein Werkstück 2 mit einer Werkstückfläche 2b bearbeitbar, die einen Winkel von 45° zur unteren Oberfläche des plattenförmigen Werkstücks 2 aufweist.

Darüber hinaus weist die Bearbeitungsvorrichtung eine Rotationseinrichtung 6 zur Rotation des Bearbeitungsaggregats 5 bzw. der Schwenkeinrichtung 3 um eine Rotationsachse C senkrecht zur imaginären Schwenkachse A auf. Wie in Figur 2 gezeigt verläuft die Rotationsachse C durch das Bearbeitungsaggregat 5 und gleichzeitig durch die Rotationseinrichtung 6 hindurch. Somit kann das Bearbeitungsaggregat 5 in einer beliebigen geschwenkten oder nicht-geschwenkten Position, das heißt der Ausgangsposition, um die Rotationsachse C rotiert werden.
Die Schwenkeinrichtung 5 weist einen Schwenkantrieb auf. Darüber hinaus ist ein Antrieb für die Leimwalze 7 vorgesehen. Des Weiteren kann eine Leimversorgung angeordnet sein.

Eine Schnittstelle (nicht gezeigt) zur Energie-, Informations- und Medienübertragung und/oder Arretierung des Bearbeitungsaggregats ist vorgesehen. Darüber hinaus weist das Bearbeitungsaggregat 5 eine Wechselschnittstelle 8 zum Wechseln des Bearbeitungsaggregats und/oder Werkzeugs auf, wie in Fig. 1 gezeigt. Darüber ist das Bearbeitungsaggregat 5 in einem Schlitten 9 aufgenommen, der in der Schwenkführung 4 gelagert ist.

Alternativ kann die Schwenkführung 4 ein ebenes Koppelgetriebe aufweisen (nicht gezeigt). Die Merkmale dieser zweiten Ausführungsform entsprechen denen der ersten Ausführungsform bis auf die Ausbildung der Schwenkführung als Kegelschnittform.

Beim Beschichten des Werkstücks 2 durch die Bearbeitungsvorrichtung 1 wird das Werkstück 2 an einer ersten Werkstückfläche 2a beschichtet, wie in Fig. 1 gezeigt, wobei sich das Bearbeitungsaggregat 5 in einer ersten Position, der Ausgangsposition, befindet. Anschließend wird das Bearbeitungsaggregat 5 durch die Schwenkführung 4 in eine zweite Position geschwenkt, wobei die Schwenkachse A durch das Bearbeitungsaggregat 5 hindurchgeht. Dann wird eine zweite Werkstückfläche 2b, wie in Fig. 2 gezeigt, die einen Winkel ungleich 90° zur plattenförmigen Werkstückoberfläche aufweist, in der zweiten Position bearbeitet. Die Reihenfolge der Bearbeitung der Werkstückflächen 2a und 2b kann auch umgekehrt sein, sodass zuerst eine Bearbeitung der Schrägkante 2b und dann eine Bearbeitung der senkrechten Werkstückfläche 2a durchgeführt wird. Das Werkstück 2 wird mittels einer Leimwalze 7 beschichtet.

## Patentansprüche

1. Beschichtungsvorrichtung (1) zum Beschichten von Werkstücken (2), die bevorzugt zumindest teilweise aus Holz, Holzwerkstoffen, Kunststoff oder dergleichen bestehen, mit
einer Schwenkeinrichtung (3), die an der Bearbeitungsvorrichtung angeordnet ist, und einem zur Beschichtung eines Werkstücks vorgesehenen Beschichtungsaggregat (5), wobei
die Schwenkeinrichtung (3) eine Schwenkführung (4) zum Führen einer Schwenkbewegung um eine Schwenkachse (A) aufweist, wobei das Beschichtungsaggregat in der Schwenkführung der Schwenkeinrichtung relativ zur Beschichtungsvorrichtung schwenkbar gelagert ist, wodurch ein Werkstück (2), das zumindest eine erste Werkstückfläche (2a) mit einer ersten Orientierung (O) und eine zweite Werkstückfläche (2b) mit einer zweiten Orientierung (U) ungleich der ersten Orientierung aufweist, in einer ersten Position des Beschichtungsaggregats an der ersten Werkstückfläche (2a) und in einer geschwenkten Position des Beschichtungsaggregats an der zweiten Werkstückfläche (2b) beschichtbar ist,
**dadurch gekennzeichnet, dass** die Schwenkführung (4) derart ausgebildet ist, dass die Schwenkachse (A) eine imaginäre Schwenkachse ist, die außerhalb der Schwenkführung (4) liegt, und durch das Bearbeitungsaggregat (5) hindurchgeht.

2. Beschichtungsvorrichtung nach einem der vorhergehenden Ansprüche, **dadurch gekennzeichnet, dass** die Schwenkführung derart ausgebildet ist, dass die Störkontur des Beschichtungsaggregats beim Schwenken minimal ist.

3. Beschichtungsvorrichtung nach Anspruch 1 oder 2, **dadurch gekennzeichnet, dass** die Schwenkführung zumindest abschnittsweise parabel-, hyperbel- und/oder ellipsenförmig, vorzugsweise kreisförmig, ausgebildet ist.

4. Beschichtungsvorrichtung nach einem der vorhergehenden Ansprüche, **dadurch gekennzeichnet, dass** der Schwenkwinkel +/- 65 Grad aufweist.

5. Beschichtungsvorrichtung nach einem der vorhergehenden Ansprüche, **dadurch gekennzeichnet, dass** die Beschichtungsvorrichtung eine Rotationseinrichtung (6) zur Rotation des Beschichtungsaggregats um eine Rotationsachse (C) senkrecht zur Schwenkachse (A) aufweist.

6. Beschichtungsvorrichtung nach einem der vorhergehenden Ansprüche, **dadurch gekennzeichnet, dass** die Schwenkeinrichtung (5) einen Schwenkantrieb, vorzugsweise einen gelenkig gelagerten Kugelgewindetrieb, Druckluftmotor, Hydraulikmotor, Torquemotor, Direktantrieb, Riementrieb, Zahnstangenantrieb oder Linearmotor, aufweist.

7. Beschichtungsvorrichtung nach einem der vorhergehenden Ansprüche, **dadurch gekennzeichnet, dass** die Schwenkeinrichtung und/oder das Beschichtungsaggregat einen Antrieb für eine Leimwalze, eine Hauptspindel und/oder einen Messerkopf aufweist.

8. Beschichtungsvorrichtung nach Anspruch 7, **dadurch gekennzeichnet, dass** die Schwenkeinrichtung und/oder das Beschichtungsaggregat einen Leimwalzenantrieb und eine Leimversorgung aufweist.

9. Beschichtungsvorrichtung nach einem der vorhergehenden Ansprüche, **dadurch gekennzeichnet, dass** zwischen dem Beschichtungsaggregat (5) und der Schwenkeinrichtung (3) eine Schnittstelle zur Energie-, Informations- und Medienübertragung und/oder Arretierung des Beschichtungsaggregats vorgesehen ist.

10. Beschichtungsvorrichtung nach einem der vorhergehenden Ansprüche, **dadurch gekennzeichnet, dass** das Beschichtungsaggregat eine Wechselschnittstelle (8) aufweist.

11. Verfahren zum Beschichten eines Werkstücks (2), das zumindest eine erste Werkstückfläche (2a) mit einer ersten Orientierung (O) und eine zweite Werkstückfläche (2b) mit einer zweiten Orientierung (U) ungleich der ersten Orientierung aufweist, durch eine Beschichtungssvorrichtung (1) mit
einer Schwenkeinrichtung (3), die an der Beschichtungsvorrichtung (1) angeordnet ist und eine Schwenkführung (4) zum Schwenken um eine imaginäre Schwenkachse (A) aufweist, die außerhalb der Schwenkführung liegt, und
einem Beschichtungsaggregat (5), das durch die Schwenkführung (4) der Schwenkeinrichtung relativ zur Beschichtungsvorrichtung schwenkbar gelagert ist, wobei in einer ersten Position des Beschichtungsaggregats (5) die erste Werkstückfläche (2a) beschichtet wird,
das Beschichtungsaggregat (5) durch die Schwenkführung in eine zweite Position geschwenkt wird, wobei die imaginäre Schwenkachse (A) durch das Beschichtungsaggregat (5) hindurchgeht, und
in der zweiten Position die zweite Werkstückfläche (2b) beschichtet wird.

12. Verfahren zum Beschichten eines Werkstücks (2) nach Anspruch 11, bei dem das Werkstück durch Heißprägen, Lackieren oder Tintenstrahlbedruckung beschichtet wird.

13. Verfahren zum Beschichten eines Werkstücks (2) nach Anspruch 12, bei dem die Beschichtung durch eine Leim-, Laser- oder Heißluftbearbeitung durchgeführt wird.

## Claims

1. Coating apparatus (1) for coating workpieces (2) which preferably consist at least partially of wood, wood materials, plastic or the like, with
a pivoting device (3) which is arranged on the processing apparatus, and
a coating unit (5) which is provided in order to coat a workpiece, wherein
the pivoting device (3) has a pivoting guide (4) serving to guide a pivoting movement around a pivoting axis (A), wherein the coating unit is mounted in the pivoting guide of the pivoting device so as to be pivotable relative to the coating apparatus,
as a result of which a workpiece (2), which has at least one first workpiece surface (2a) with a first orientation (0) and a second workpiece surface (2b) with a second orientation (U) different from the first orientation, can, in a first position of the coating unit, be coated on the first workpiece surface (2a) and can, in a pivoted position of the coating unit, be coated on the second workpiece surface (2b),
**characterised in that** the pivoting guide (4) is designed such that the pivoting axis (A) is an imaginary pivoting axis which lies outside of the pivoting guide (4) and passes through the processing unit (5).

2. Coating apparatus according to one of the preceding claims, **characterised in that** the pivoting guide is designed such that that the interference contour of the coating unit is minimal during pivoting.

3. Coating apparatus according to claim 1 or 2, **characterised in that** the pivoting guide is, at least in sections, parabolic, elliptical, preferably circular in form.

4. Coating apparatus according to one of the preceding claims, **characterised in that** the pivot angle is +/- 65 degrees.

5. Coating apparatus according to one of the preceding claims, **characterised in that** the coating apparatus has a rotation device (6) for rotating the coating unit around an axis of rotation (C) perpendicular to the pivoting axis (A).

6. Coating apparatus according to one of the preceding claims, **characterised in that** the pivoting device (5) has a rotary actuator, preferably an articulated ball screw drive, compressed air motor, hydraulic motor, torque motor, direct drive, belt drive, rack and pinion drive or linear motor.

7. Coating apparatus according to one of the preceding claims, **characterised in that** the pivoting device and/or the coating unit has a drive for a glue roller, a main spindle and/or a cutter head.

8. Coating apparatus according to claim 7, **characterised in that** the pivoting device and/or the coating unit has a glue roller drive and a glue supply.

9. Coating apparatus according to one of the preceding claims, **characterised in that** an interface for the transmission of energy, information and media and/or locking of the coating unit is provided between the coating unit (5) and the pivoting device (3).

10. Coating apparatus according to one of the preceding claims, **characterised in that** the coating unit has a changing interface (8).

11. Method for coating a workpiece (2) having at least one first workpiece surface (2a) with a first orientation (0) and a second workpiece surface (2b) with a second orientation (U) different to the first orientation by means of a coating apparatus (1) with
a pivoting device (3) which is arranged on the coating apparatus (1) and a pivoting guide (4) for pivoting around an imaginary pivoting axis (A) which lies outside of the pivoting guide and
a coating unit (5) which is mounted so as to be pivotable relative to the coating apparatus through the pivoting guide (4) of the pivoting device, wherein
in a first position of the coating unit (5) the first workpiece surface (2a) is coated,
the coating unit (5) is pivoted into a second position through the pivoting guide, wherein the imaginary pivoting axis (A) passes through the coating unit (5), and
in the second position the second workpiece surface (2b) is coated.

12. Method for coating a workpiece (2) according to claim 11, in which the workpiece is coated through hot stamping, painting or inkjet printing.

13. Method for coating a workpiece (2) according to claim 12, in which the coating is carried out by means of glue, laser or hot-air processing.

## Revendications

1. Dispositif de revêtement (1) pour le revêtement de pièces (2) qui sont constituées de préférence au moins en partie de bois, de matériaux en bois, de matière plastique ou similaires, avec
un système de pivotement (3) qui est disposé au niveau du dispositif de traitement, et
un ensemble de revêtement (5) prévu pour le revêtement d'une pièce, dans lequel
le système de pivotement (3) présente un guide de pivotement (4) pour le guidage d'un mouvement de pivotement autour d'un axe de pivotement (A), dans lequel l'ensemble de revêtement est placé dans le guide de pivotement du système de pivotement de façon à pouvoir pivoter par rapport au dispositif de revêtement,
moyennant quoi, une pièce (2) qui présente au moins une première surface de pièce (2a) avec une première orientation (O) et une deuxième surface de pièce (2b) avec une deuxième orientation (U) non similaire à la première orientation, peut être revêtue dans une première position de l'ensemble de revêtement au niveau de la première surface de pièce (2a) et dans une position pivotée de l'ensemble de revêtement au niveau de la deuxième surface de pièce (2b),
**caractérisé en ce que** le guide de pivotement (4) est conçu de telle sorte que l'axe de pivotement (A) est un axe de pivotement imaginaire qui se situe en dehors du guide de pivotement (4) et passe par l'ensemble de revêtement (5).

2. Dispositif de revêtement selon l'une quelconque des revendications précédentes, **caractérisé en ce que** le guide de pivotement est conçu de telle sorte que le contour gênant de l'ensemble de revêtement lors du pivotement est minime.

3. Dispositif de revêtement selon la revendication 1 ou 2, **caractérisé en ce que** le guide de pivotement est conçu au moins par endroits, en forme de parabole, d'hyperbole et/ou d'ellipse, de préférence est de forme circulaire.

4. Dispositif de revêtement selon l'une quelconque des revendications précédentes, **caractérisé en ce que** l'angle de pivotement présente +/- 65 degrés.

5. Dispositif de revêtement selon l'une quelconque des revendications précédentes, **caractérisé en ce que** le dispositif de revêtement présente un système de rotation (6) pour la rotation de l'ensemble de revêtement autour d'un axe de rotation (C) perpendiculairement à l'axe de pivotement (A).

6. Dispositif de revêtement selon l'une quelconque des revendications précédentes, **caractérisé en ce que** le système de pivotement (5) présente un entraînement de pivotement, de préférence une vis d'entraînement à billes articulée, un moteur à air comprimé, un moteur hydraulique, un moteur - couple, un entraînement direct, un entraînement par courroie, un entraînement à crémaillère ou un moteur linéaire.

7. Dispositif de revêtement selon l'une quelconque des revendications précédentes, **caractérisé en ce que** le système de pivotement et/ou l'ensemble de revêtement présente un entraînement pour un rouleau encolleur, une broche principale et/ou une tête de coupe.

8. Dispositif de revêtement selon la revendication 7, **caractérisé en ce que** le système de pivotement et/ou l'ensemble de revêtement présente un entraînement de rouleau encolleur et une alimentation en colle.

9. Dispositif de revêtement selon l'une quelconque des revendications précédentes, **caractérisé en ce que**, entre l'ensemble de revêtement (5) et le système de pivotement (3) est prévue une interface pour la transmission d'énergie, d'informations et de milieux et/ou l'arrêt de l'ensemble de revêtement.

10. Dispositif de revêtement selon l'une quelconque des revendications précédentes, **caractérisé en ce que** l'ensemble de revêtement présente une interface interchangeable (8).

11. Procédé de revêtement d'une pièce (2) qui présente au moins une première surface de pièce (2a) avec une première orientation (O) et une deuxième surface de pièce (2b) avec une deuxième orientation (U) non similaire à la première orientation, par un dispositif de revêtement (1) avec un système de pivotement (3) qui est disposé au niveau du dispositif de revêtement (1) et présente un guide de pivotement (4) pour le pivotement autour d'un axe de pivotement imaginaire (A) qui se trouve hors du guide de pivotement, et
un ensemble de revêtement (5) qui est placé par le guide de pivotement (4) du système de pivotement de façon à pouvoir pivoter par rapport au dispositif de revêtement, dans lequel
dans une première position de l'ensemble de revêtement (5) la première surface de pièce (2a) est revêtue,
l'ensemble de revêtement (5) est pivoté par le guide de pivotement dans une deuxième position, dans lequel l'axe de pivotement imaginaire (A) passe par l'ensemble de revêtement (5), et
dans la deuxième position la deuxième surface de pièce (2b) est revêtue.

12. Procédé de revêtement d'une pièce (2) selon la revendication 11, lors duquel la pièce est revêtue par gaufrage à chaud, laquage ou impression à jet d'encre.

13. Procédé de revêtement d'une pièce (2) selon la revendication 12, lors duquel le revêtement est réalisé par traitement à la colle, au laser ou à l'air chaud.
